# EUROPÄISCHE PATENTSCHRIFT

(11) **EP 1 595 103 B1**
(45) Veröffentlichungstag und Bekanntmachung des Hinweises auf die Patenterteilung: **26.07.2006**
(21) Anmeldenummer: 03789103.3
(22) Anmeldetag: 28.11.2003
(51) Int. Cl.: F28F 3/02, F28F 21/02, F16D 65/853

(54) **SCHEIBENBREMSE MIT KÜHLKÖRPER**
DISK BRAKE COMPRISING A COOLING MEMBER
FREIN A DISQUE COMPORTANT UN CORPS DE REFROIDISSEMENT

(30) Priorität: 08.02.2003 DE 10305249
(43) Veröffentlichungstag der Anmeldung: 16.11.2005
(73) Patentinhaber: AUDI AG, 85045 Ingolstadt (DE)
(72) Erfinder: PABST, Hans-Georg, 85080 Gaimersheim (DE)
(74) Vertreter: Asch, Konrad
(86) Internationale Anmeldenummer: PCT/EP2003/013448
(87) Internationale Veröffentlichungsnummer: WO 2004/070305

(56) Entgegenhaltungen:
- WO-A-01/67019
- GB-A- 701 725
- US-A- 2 764 265
- US-A- 3 767 015
- US-A- 3 850 267
- US-A- 5 077 103
- US-A- 5 542 471

## Beschreibung

Die Erfindung betrifft eine Scheibenbremse gemäß der im Oberbegriff des Anspruchs 1 angegebenen Art.

Bei einem Bremsvorgang erzeugt die zwischen der Bremsscheibe und den Bremsbelägen stattfindende Reibung Wärme, die auf die beteiligten Bauteile und insbesondere auf die Bremsscheibe übertragen wird. Um die beteiligten Materialien und Bauteile zu schonen, besteht die Forderung nach einer möglichst geringen Temperatur im Bereich der beteiligten Bauteile. Bei einer starken und länger anhaltenden Bremsung kann die Temperatur jedoch eine Höhe erreichen, die für die betroffenen Bauteile schädlich ist.

Eine Scheibenbremse der eingangs angegebenen Art ist in der US-A-3 850 267 beschrieben. Diese vorbekannte Scheibenbremse weist eine drehbar gelagerte Bremsscheibe und wenigstens einen Bremsbelag auf, der in einem Bremssattel angeordnet und seitlich gegen die Bremsscheibe bewegbar gelagert ist. Es ist ein Kühlkörper aus einem wärmeleitenden Material vorgesehen, der wenigstens ein Befestigungselement aufweist, mit dem dieser in einer Position anordbar ist, in der sich seine Wärme-Aufnahmeseite an einer Seite der Bremsscheibe befindet, und der mit einem Kühler verbunden ist. Es ist auf jeder Seite der Bremsscheibe ein entsprechnder Kühlkörper angeordnet. Bei dieser vorbekannten Schein benbremse ist der Kühler durch einen Kühlkreislauf gebildet, dessen Kühlkanäle sich jeweils mittig durch die Kühlkörper erstrecken, die jeweils durch eine V-förmige Feder elastisch gegen die Bremsscheibe beaufschlagt sind.

Aus der US-A-5 542 471 ist ein Wärmeleitelement mit sich quer zu seiner Wärme-Aufnahmeseite erstreckenden Graphitfasern beschrieben. Die Querschnittsform des Wärmeleitelements kann H-förmig sein, wobei die durch die H-Form gebildeten Kanäle Kühlkanäle bilden können.

Der Erfindung liegt die Aufgabe zugrunde, bei einer Scheibenbremse der vorliegenden Art eine Ausgestaltung zu finden, bei der unter Vermeidung der genannten Nachteile die Erwärmung verringert wird.

Diese Aufgabe wird durch die kennzeichnenden Merkmale des Anspruches 1 in Verbindung mit seinen Oberbegriffsmerkmalen gelöst.

Die Unteransprüche bilden vorteilhafte Weiterbildungen der Erfindung.

Der Erfindung liegt die Erkenntnis zugrunde, dass sich die Erwärmung durch eine gezielte Abfuhr der Wärme. von der Bremsscheibe vermindern lässt.

Die Scheibenbremse weist einen kühlkörper aus einem wärmeleitenden Material auf, der wenigstens mit einem Befestigungselement versehen ist, mit dem dieser in einer Position anordbar ist, in der sich seine Wärme-Aufnahmeseite an einer Seite der Bremsscheibe befindet, und der mit seinem der Wärme-Aufnahmeseite entfernt gelegenen Bereich mit einem Kühler verbunden ist. Durch den Kühlkörper wird Wärme gezielt der Bremsscheibe entzogen, auf den Kühlkörper übertragen und durch den Kühler abgeführt. Infolgedessen wird die sonst mögliche Erwärmung der Bremsscheibe wesentlich gesenkt. Außerdem wird auch die Erwärmung der Bremsbeläge und deren benachbarter Bauteile vermindert, da die Bremsscheibe aufgrund ihrer verringerten möglichen Erwärmung Wärme von diesen Bauteilen übernimmt.

Vorzugsweise besteht das wärmeleitende Material des Kühlkörpers aus Kupfer oder hochwärmeleitendem Kunststoff. Erfidungsgemäß umfaßt das wärmeleitende Material eingebettete hochwärmeleitende Kohlenstofffasern, die quer zur Wärme-Aufnahmeseite verlaufen. Hierdurch wird zum einen eine hohe Wärmeleitung im Kühlkörper und damit auch einen leistungsfähigen Transport der Wärme zum Kühler gewährleistet. Die im Handel erhältlichen hochwärmeleitenden Kohlenstofffasern mit einer spezifischen Wärmeleitfähigkeit von bis zu 1000 W/(mK) ermöglichen diese hohe Wärmeleitung. Auch dann, wenn diese Kohlenstofffasern durch Einbettung zu auf dem Fachmarkt unter der Bezeichnung "CFK-Bauteile" bekannten und erhältlichen Bauteilen verarbeitet sind, lässt sich noch eine Wärmeleitfähigkeit bis zu 600 W/(mK) erreichen. Zum anderen sind diese Materialien leichter als Aluminium. Der Kühlkörper führt bei der Scheibenbremse zu einer Gewichtsreduzierung, da die doppelwandige, belüftete Bremsscheibe durch einen leichten Scheibenring ohne Kühlluftführungen ersetzt wird.

Vor allem lässt sich die Wärmeabsorption dadurch verbessern, wenn die Kohlenstofffasern mit einem Metall, vorzugsweise Kupfer, umhüllt, insbesondere umspritzt, sind, was zur leistungsfähigen Wärmeleitung im Kühlkörper beiträgt.

Gemäß einer Ausführungsform der Erfindung stehen die Kohlenstofffasern an der Wärme-Aufnahmeseite und/oder an der der Wärme-Aufnahmeseite entfernt gelegenen Rückseite wie Pelzhaare ab. Hierdurch verbessert sich die Wärmeübertragung zum einen auf die Kohlenstofffasern und zum anderen von diesen auf das Kühlmedium. Die Kohlenstofffaserenden können dabei mit Nanotechnik mit Kunstdiamant überzogen sein, wodurch sich der Wärmeübergang verbessert, der niedrigere Reibwert erhalten bleibt und die Verschleißfestigkeit erheblich erhöht wird.

Zudem kann die Stabilität des Kühlkörpers vergrößert und die Möglichkeiten seiner Befestigung im Bereich der Scheibenbremse dadurch verbessert werden, wenn das Material des Kühlkörpers von einem Rahmen umgeben ist.

Vorzugsweise ist an der der Wärme-Aufnahmeseite entfernt gelegenen Rückseite des Kühlkörpers ein von einem Gehäuse umgebener Hohlraum angeordnet, der an einen Kühlkreislauf angeschlossen ist. Dies ermöglicht eine leistungsfähige Abfuhr der Wärme vom rückseitigen Bereich des Kühlkörpers.

Gemäß einer Ausführungsform der Erfindung ist das Befestigungselement etwa mittig in der der Wärme-Aufnahmeseite entfernt gelegenen Rückseite angeordnet. Hierdurch wird eine einfache Halterung für den Kühlkörper ermöglicht, wobei bei einer Halterung an nur einem Halterungspunkt eine optimale Position der Wärme-Aufnahmeseite bezüglich der Bremsscheibe gewährleistet ist.

Vorzugsweise ist das Befestigungselement mit einer Feder, insbesondere einer Blattfeder, verbunden, deren Federweg quer zur Wärme-Aufnahmeseite gerichtet ist und die am Kühlkörper an der Seite der Bremsscheibe hält. Die Anlage der Wärme-Aufnahmeseite an der Bremsscheibe bei Luftspalt gleich Null wird dadurch gewährleistet und deshalb auch eine optimale Wärmeübertragung. Außerdem ist eine selbsttätige Nachführung des Kühlkörpers bei einem Verschleiß der Bremsscheibe gewährleistet, so dass der Luftspalt immer gleich Null bleibt.

Weitere Vorteile, Merkmale und Anwendungsmöglichkeiten der vorliegenden Erfindung ergeben sich aus der nachfolgenden Beschreibung in Verbindung mit dem in der Zeichnung dargestellten Ausführungsbeispiel.

Die Erfindung wird im Folgenden anhand des in der Zeichnung dargestellten Ausführungsbeispiels näher beschrieben. In der Beschreibung, in den Patentansprüchen, in der Zusammenfassung und in der Zeichnung werden die in der hinten angeführten Liste der Bezugszeichen verwendeten Begriffe und zugeordneten Bezugszeichen verwendet. In der Zeichnung bedeutet:
- Fig. 1: eine vereinfachte Seitenansicht der oberen Hälfte einer Scheibenbremse eines Fahrzeugs, insbesondere eines Personen-Kraftwagens, mit einem erfindungsgemäßen Kühlkörper;
- Fig. 2: eine Draufsicht auf die Scheibenbremse; und
- Fig. 3: den vereinfachten Teilschnitt gemäß der Linie III-III in Fig. 1.

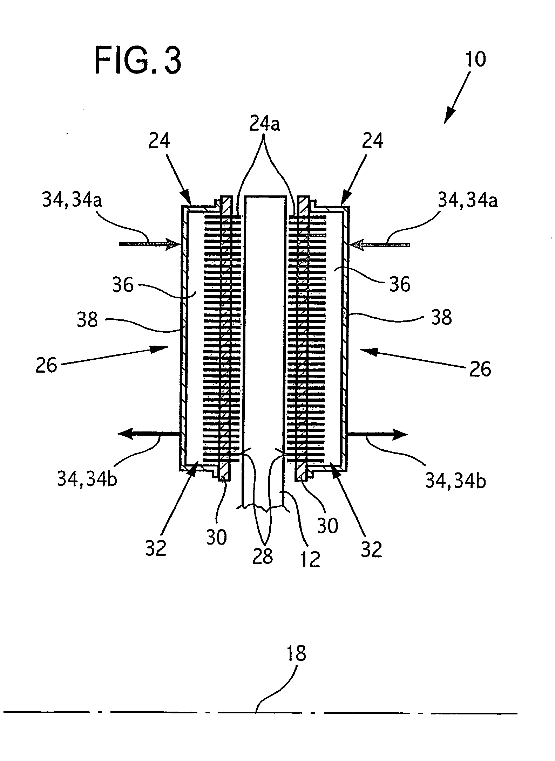

Die in ihrer Gesamtheit mit 10 bezeichnete Scheibenbremse weist eine Bremsscheibe 12 in Form eines flachen Scheibenringes auf, die an einem ringförmigen Bremsscheibenträger 14 befestigt ist, der in nicht dargestellter Weise auf einem Rotationskörper 16 befestigt ist, z. B. einer drehbar gelagerten und gegebenenfalls angetriebenen und gegebenenfalls lenkbaren Radwelle oder Radachse. Von dem Rotationskörper 16 bzw. der Radwelle oder Radachse ist in Fig. 3 nur die Drehachse 18 dargestellt.

Auf beiden Seiten der Bremsscheibe 12 ist jeweils ein, z. B. scheibenförmiger, Bremsbelag 20 in einem Bremssattel 22 angeordnet. Durch die Betätigung eines Bremspedals (nicht dargestellt) lässt sich in an sich bekannter Weise die Bremsscheibe 12 zwischen den Bremsbelägen 20 klemmen, wodurch ein Bremsvorgang eingeleitet wird. Der die Bremsscheibe 12 z. B. U-förmig umgreifende Bremssattel 22 ist bezüglich der Drehachse 18 in nicht dargestellter Weise fixiert. Er kann an einem nicht dargestellten Radlagerträger befestigt sein.

Die Bremsscheibe 12 kann unterschiedlich ausgebildet sein und z. B. aus Metall, insbesondere Grauguss oder vorzugsweise aus legiertem Stahl, bestehen. Sie kann aber auch aus Keramik bestehen oder im Bereich ihrer Reibungsflächen mit Keramik besetzt sein. Als KeramikMaterial eignen sich u. a. versinterte Aluminiumkeramikfasern und Kohlenstofffasern (Siliziumkarbid). Der Keramikbelag kann in Form eines Ringes oder segmentförmig angeordnet sein, z. B. in Form von Segmenten, die an einem Trägerring fixiert sind. Die Bremsscheibe 12 ist vorzugsweise einwandig ausgebildet, wodurch eine kleine Bauweise erreicht und Material und Gewicht eingespart wird.

Im Bremsbetrieb entsteht aufgrund der Reibung Wärme, die die Bremsscheibe 12 als Körperwärme aufnimmt, und die von so hoher Temperatur sein kann, dass die Bremsscheibe 12 selbst oder auch benachbarte Teile der Scheibenbremse 10 oder der Karosserie des Fahrzeugs einen Schaden erleiden können.

Zu dem einseitig oder beidseitig angeordneten Bremsbelag 20 ist in Umfangsrichtung versetzt auf einer Seite oder auf beiden Seiten der Bremsscheibe 12 jeweils ein Kühlkörper 24 angeordnet, der einen Teil dieser Wärme aufnimmt und abführt und dadurch die bei einem Bremsvorgang auf die Bremsscheibe 12 übertragene Temperatur senkt bzw. nicht so stark ansteigen lässt.

Der Kühlkörper 24 ist Teil einer Kühleinrichtung 26 und weist eine plattenförmige Form auf mit einer ebenen Wärme-Aufnahmeseite 28 an seiner der Bremsscheibe 12 zugewandten Seite. Der Kühlkörper 24 besteht aus einem Material hoher Wärmeleitfähigkeit, insbesondere aus eingebetteten hochwärmeleitenden Kohlenstofffasern 24a, die in zu Bauteilen verarbeiteter Form als CFK-Bauteile an sich bekannt sind. Die Kohlenstofffasern 24a sind mit einer Matrix zu einem festen Material zusammengefügt.

Bei einer bevorzugten Ausgestaltung sind die Kohlenstofffasern 24a quer zur Wärme-Aufnahmeseite 28 ausgerichtet angeordnet und an ihren Mantelflächen miteinander verbunden. Dabei können die Kohlenstofffasern 24a mit Metall, insbesondere Metall hoher Wärmeleitfähigkeit wie z. B. Kupfer, umhüllt sein, vorzugsweise umspritzt, sein. Zum einen werden dadurch die Wärmeleitfähigkeit und zum anderen der mechanische Zusammenhalt verbessert. Das Fasermaterial bzw. die Fasern können von einem Rahmen 30 umgeben sein, wodurch die Festigkeit und Stabilität des Kühlkörpers 24 weiter vergrößert werden.

Der Kühlkörper 24 wirkt an seiner der Wärme-Aufnahmeseite 28 abgewandten Rückseite mit einem Kühler 32 zusammen und ist mit diesem verbunden. Hierüber wird die im Kühlkörper 24 zur Rückseite geleitete Wärme abführt. Der Kühler 32 kann mit einem verdunstenden Medium im Sinne einer sogenannten Heatpipe funktionieren.

Beim Ausführungsbeispiel ist ein Kühlkreislauf 34 mit einem vorzugsweise flüssigen Kühlmedium, z. B. Wasser, vorgesehen. Der Kühlkreislauf 34 durchströmt einen an der Rückseite angeordneten abgedichteten Hohlraum 36, der rückseitig und an seinem Umfang durch ein Gehäuse 38 begrenzt ist. Das Gehäuse kann ein einteiliger Abschnitt oder ein rückseitiges Anbauteil des Rahmens 30 sein. Eine das Gehäuse 38 durchsetzende Zuführungsleitung und Abführungsleitung sind mit 34a und 34b bezeichnet.

Es ist vorteilhaft, wenn die Kohlenstofffasern 24a an der Wärme-Aufnahmeseite 28 und/oder Rückseite die Einbettung im Kühlkörper 24 überragen und wie kurze Pelzhaare abstehen, und somit rückseitig in das Kühlmedium hineinragen. Das die Kohlenstofffasern 24a umgebende Metall verbessert die Wärmeleitung. Kohlenstofffasern haben zusätzlich zu ihrer hohen Wärmeleitfähigkeit auch den Vorteil, aufgrund ihrer schwarzen Farbe mit hohem Wirkungsgrad Strahlungswärme auffangen und weiterleiten zu können.

Der Kühlkörper 24 kann direkt oder durch seinen Rahmen 30 oder das Gehäuse 38 bezüglich der Drehachse 18 befestigt sein, z. B. am Bremssattel 22. Eine besonders vorteilhafte Position für den Kühlkörper 24 ist in der Drehrichtung 40 der Bremsscheibe 12 direkt hinter den Bremsbelägen 20 bzw. dem Bremssattel 22, wo die Temperatur am größten ist.

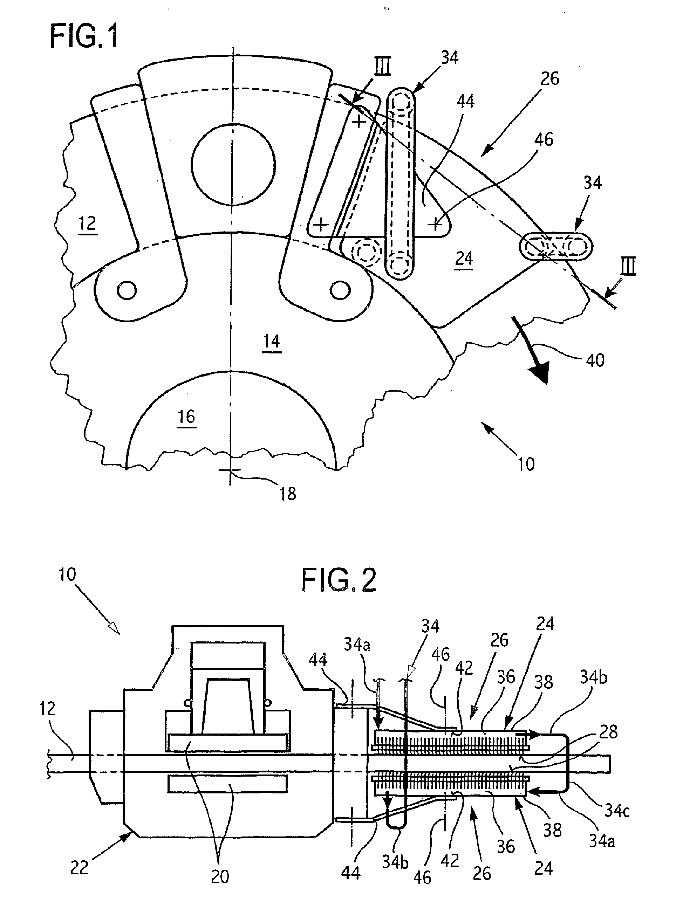

Der Luftspalt zwischen der Wärme-Aufnahmeseite 28 und der Bremsscheibe 12 soll zwecks guter Wärmeübertragung möglichst gering sein. Der Kühlkörper 24 kann auch leicht an der Bremsscheibe 12 anliegen. Wie Fig. 2 zeigt, können die an der Wärme-Aufnahmeseite 28 abstehenden Kohlenstofffasern 24a elastisch biegsam sein und etwas abgebogen an der Bremsscheibe 12 anliegen. Hierdurch lässt sich ein durch Verschleiß an der Bremsscheibe 12 entstehender Luftspalt durch eine Entspannungsbewegung der Kohlenstofffasern 24a selbsttätig überbrücken, so dass ein Luftspalt vermieden wird.

Ein Luftspalt lässt sich auch dann vermeiden, wenn der Kühlkörper 24 in einer quer zur Wärme-Aufnahmeseite 28 gerichteten Führung 42 verschiebbar geführt und durch die Kraft einer Feder 44 leicht gegen die Bremsscheibe 12 vorgespannt ist. Beim Ausführungsbeispiel ist der Kühlkörper 24 durch die Feder 44 gehalten, geführt und leicht gegen die Bremsscheibe 12 vorgespannt. Die Feder 44 ist vorzugsweise eine Blattfeder, die vorzugsweise im mittleren Bereich der Rückwand des Gehäuses 38 an einem an der Rückwand angeordneten Befestigungselement 46 befestigt ist. In ihrem anderen Endbereich ist die Feder 44 z. B. am Bremssattel 22 oder einem Anbauteil desselben befestigt. Als Befestigungselemente können z. B. Löcher für durch Mittellinien angedeutete Schrauben oder Nieten vorgesehen sein.

Die auf beiden Seiten der Bremsscheibe 12 angeordneten Kühlkörper 24 bzw. Kühleinrichtungen 26 sind bezüglich der Bremsscheibe 12 spiegelsymmetrisch angeordnet. Die Abführungsleitung 34b des einen Kühlkörpers 24 und die Zuführungsleitung 34a des anderen Kühlkörpers 24 können durch eine gemeinsame, die Bremsscheibe 12 umgehende Verbindungsleitung 34c gebildet sein.

Wenn die Kühlkörper 24 gegen die Bremsscheibe 12 bewegbar ausgebildet sind, handelt es sich bei den Zu- und Abführungsleitungen 34a, 34b, 34c um flexible Leitungen.

### B E Z U G S Z E I C H E N L I S T E

- 10: Scheibenbremse
- 12: Bremsscheibe
- 14: Bremsscheibenträger
- 16: Rotationskörper
- 18: Drehachse
- 20: Bremsbelag
- 22: Bremssattel
- 24: Kühlkörper
- 24a: Kohlenstofffasern
- 26: Kühleinrichtung
- 28: Wärme-Aufnahmeseite
- 30: Rahmen
- 32: Kühler
- 34: Kühlkreislauf
- 34a: Zuführungsleitung
- 34b: Abführungsleitung
- 34c: Verbindungsleitung
- 36: Hohlraum
- 38: Gehäuse
- 40: Drehrichtung
- 44: Feder
- 46: Befestigungselement

## Patentansprüche

1. Scheibenbremse (10), insbesondere für ein Kraftfahrzeug, mit einer drehbar gelagerten Bremsscheibe (12) und wenigstens einem Bremsbelag (20), der in einem Bremssattel (22) angeordnet und seitlich gegen die Bremsscheibe (12) bewegbar gelagert ist, wobei ein Kühlkörper (24) aus einem wärmeleitenden Material vorgesehen ist, der wenigstens ein Befestigungselement (46) aufweist, mit dem dieser in einer Position anordbar ist, in der sich seine Wärme-Aufnahmeseite (28) an einer Seite der Bremsscheibe (12) befindet, und der mit einem Kühler (32) verbunden ist, **dadurch gekennzeichnet, dass** das wärmeleitende Material des Kühlkörpers (24) eingebettete hochwärmeleitende Kohlenstofffasern (24a) umfasst, die quer zur Wärme-Aufnahmeseite (28) verlaufend angeordnet sind, und dass der Kühlkörper (24) an seiner der Wärme-Aufnahmeseite (28) abgewandten Rückseite mit dem Kühler (32) verbunden ist und damit zusammenwirkt.

2. Scheibenbremse nach Anspruch 1, **dadurch gekennzeichnet, dass** die Kohlenstofffasern (24a) mit einem Metall, vorzugsweise Kupfer, umhüllt sind, insbesondere umspritzt, sind.

3. Scheibenbremse nach Anspruch 1 oder 2, **dadurch gekennzeichnet, dass** die Kohlenstofffasern (24a) an der Wärme-Aufnahmeseite und/oder an der der Wärme-Aufnahmeseite (28) entfernt gelegenen Rückseite wie Pelzhaare abstehen, die insbesondere mittels Nanotechnik mit Kunstdiamant überzogen sind.

4. Scheibenbremse nach einem der vorhergehenden Ansprüche, **dadurch gekennzeichnet, dass** das wärmeleitende Material des Kühlkörpers (24) von einem Rahmen (30) umgeben ist.

5. Scheibenbremse nach einem der vorhergehenden Ansprüche, **dadurch gekennzeichnet, dass** an der der Wärme-Aufnahmeseite (28) entfernt gelegenen Rückseite des Kühlkörpers (24) ein von einem Gehäuse (38) umgebener Hohlraum (36) angeordnet ist, der an einen Kühlkreislauf (34) angeschlossen ist.

6. Scheibenbremse nach einem der vorhergehenden Ansprüche, **dadurch gekennzeichnet, dass** das Befestigungselement (46) etwa mittig an der der Wärme-Aufnahmeseite (28) entfernt gelegenen Rückseite angeordnet ist.

7. Scheibenbremse nach einem der vorhergehenden Ansprüche, **dadurch gekennzeichnet, dass** das Befestigungselement (46) mit einer Feder (44), insbesondere einer Blattfeder, verbunden ist, deren Federweg quer zur Wärme-Aufnahmeseite (28) gerichtet ist und die den Kühlkörper (24) an der Seite der Bremsscheibe (12) hält.

## Claims

1. Disc brake (10), in particular for a motor vehicle, comprising a rotary mounted brake disc (12) and at least one brake lining (20) which is arranged in a brake saddle (22) and mounted so as to be movable laterally towards the brake disc (12), and a cooling member (24) of a heat-ducting material is provided which comprises at least one mounting element (46) by means of which it can be arranged in a position in which its heat-pickup side (28) is located on one side of the brake disc (12) and which is linked to a cooler (32), **characterised in that** the heat-ducting material of the cooling member (24) includes embedded high-heat-ducting carbon fibres (24a) which are arranged to extend transversely to the heat-pickup side (28), and the cooling member (24) is at its rear which is facing away from the heat-pickup side (28) connected to the cooler (32) and co-acts therewith.

2. Disc brake according to Claim 1, **characterised in that** the carbon fibres (24a) are encapsulated in copper, in particular moulded.

3. Disc brake according to Claim 1 or 2, **characterised in that** the carbon fibres (24a) stand up like fur hair at the heat-pickup side and/or at the rear of the side (28) remote from the heat-pickup side (28), which hair is coated with synthetic diamond, in particular by means of nano techniques,.

4. Disc brake according to one of the above claims, **characterised in that** the heat-ducting material of the cooling member (24) is surrounded by a frame (30).

5. Disc brake according to one of the above claims, **characterised in that** at the rear of the cooling member (24) remote from the heat-pickup side (28) is arranged a cavity (36) which is surrounded by a housing (38) and connected to a cooling circuit (34).

6. Disc brake according to one of the above claims, **characterised in that** the mounting element (46) is arranged approximately centrally on the rear located remotely from the heat-pickup side (28).

7. Disc brake according to one of the above claims, **characterised in that** the mounting element (46) is connected to a spring (44), in particular a leaf-spring, the spring path of which is oriented transversely to the heat-pickup side (28) and holds the cooling member (24) at the side of the brake disc.

## Revendications

1. Frein à disque (10), en particulier pour un véhicule automobile, avec un disque de frein (12) monté rotatif et au moins une garniture de frein (20), qui est disposée dans un étrier de frein (22) et est montée mobile latéralement contre le disque de frein (12), un corps de refroidissement (24) étant prévu, constitué d'une matière thermoconductrice, qui présente au moins un élément de fixation (46), à l'aide duquel ce dernier peut être placé dans une position, dans laquelle son côté d'absorption de chaleur (28) se situe sur un côté du disque de frein (12), et qui est relié à un refroidisseur (32), **caractérisé en ce que**, la matière thermoconductrice du corps de refroidissement (24) comprend des fibres de carbone (24a) insérées et extrêmement thermoconductrices, qui sont disposées en s'étendant transversalement par rapport au côté d'absorption de chaleur (28), et **en ce que** le corps de refroidissement (24) est relié, sur son côté arrière opposé au côté d'absorption de chaleur (28), au refroidisseur (32) et par conséquent interagit avec.

2. Frein à disque selon la revendication 1, **caractérisé en ce que**, les fibres de carbone (24a) sont enveloppées, en particulier enrobées, d'un métal, de préférence de cuivre.

3. Frein à disque selon la revendication 1 ou 2, **caractérisé en ce que**, les fibres de carbones (24a) sont en saillie, sur le côté d'absorption de chaleur et/ou sur le côté arrière éloigné du côté d'absorption de chaleur (28), comme des poils de fourrure et sont notamment garnis de diamants artificiels à l'aide de la nanotechnique.

4. Frein à disque selon l'une des revendications précédentes, **caractérisé en ce que** la matière thermoconductrice du corps de refroidissement (24) est entourée par un cadre (30).

5. Frein à disque selon l'une des revendications précédentes, **caractérisé en ce que**, sur le côté arrière du corps de refroidissement (24) éloigné du corps d'absorption de chaleur (28), il est disposé un espace creux (36) entouré par un boîtier (38), qui est raccordé à un circuit de refroidissement (34).

6. Frein à disque selon l'une des revendications précédentes, **caractérisé en ce que** l'élément de fixation (46) est disposé à peu près au centre sur le côté arrière éloigné du corps d'absorption de chaleur (28).

7. Frein à disque selon l'une des revendications précédentes, **caractérisé en ce que** l'élément de fixation (46) est relié à un ressort (44), en particulier à un ressort à lames, dont la course de ressort est orientée transversalement par rapport au corps d'absorption de chaleur (28) et qui maintient le corps de refroidissement (24) sur le côté du disque de frein (12).
